# EUROPEAN PATENT SPECIFICATION

(11) **EP 3 790 752 B1**
(45) Date of publication and mention of the grant of the patent: **19.07.2023**
(21) Application number: 18869463.2
(22) Date of filing: 22.06.2018
(51) Int. Cl.: B60J 10/36, F16B 21/07

(54) **A FEMALE CLIP FOR THE ASSEMBLY OF WEATHERSTRIPS**
EIN WEIBLICHER CLIP FÜR DIE MONTAGE VON DICHTUNGEN
UN CLIP FEMELLE POUR L'ASSEMBLAGE DES JOINTS

(30) Priority: 10.05.2018 TR 201806600
(43) Date of publication of application: 17.03.2021
(73) Proprietor: Standard Profil Otomotiv Sanayi Ve Ticaret Anonim Sirketi, Kagithane/Istanbul (TR)
(72) Inventor: ÇALIK, Ferdi, 81620 Düzce (TR); YÜKSEL, Hakki Tuncay, 81620 Düzce (TR); ÇETIN, Mevlüt, 81620 Düzce (TR)
(74) Representative: Yamankaradeniz, Kemal
(86) International application number: PCT/TR2018/050315
(87) International publication number: WO 2019/216842

(56) References cited:
- EP-A1- 2 878 473
- WO-A1-2018/077500
- DE-A1- 1 575 071
- DE-A1-102007 041 537
- DE-U1-202015 101 103
- FR-A1- 2 980 444
- US-A1- 2004 163 218

## Description

### Technical Field

The invention relates to a female clip for the assembly of weatherstrips.

In particular, the invention relates to a female clip for the assembly of weatherstrips used in automotive sector to prevent the entry of water, air, sound, dust into vehicles. The female clip enables the weatherstrip fully fixed to the vehicle, by mounting on a connector pre-injected in a rubber-based injection compound of the weatherstrip and then passing to a pin spot welded to a vehicle body.

### Prior Art

EPDM (Ethylene Propylene Diene Monomer (M-Class) rubber) or TPV (Thermoplastic Vulcanizate) rubber based weatherstrips used in all automotive segments, from prestigious vehicles to commercial vehicles, are indispensable for comfort, aesthetic, performance and energy savings. The weatherstrips which are used on many visible and invisible surfaces of the vehicle such as doors, windows, hood, trunk, etc. provide comfort for users by preventing water, air, noise, dust entry. In addition, on the vehicle's visible surfaces, they provide an aesthetic appearance by completing the vehicle's line and design. Weatherstrips contain EPDM, TPV based strips with main and auxiliary materials such as flock, coating, tape, sponge, clip etc. depending on their functionality and imagery on the vehicle.

In prior art, the male clip-female part concept is used in the assembly of the weatherstrips. During the assembly of these said strips, the operator is unable to see whether the mounting has been carried out in a healthy way. For this reason, the presence of non-fixed strips causes the desired sealing effect to be lost and the mounting quality to be reduced.

When literature search is made in prior art related to the subject; one of the patent applications is a US patent application entitled 'Weatherstrip Cinch Clip' with publication number US20130061532(A1). In this application the invention relates to a weatherstrip cinch clip for a car, comprising a prong horizontally aligned between two walls perpendicular to each other.

In the case of a national patent application entitled 'Vehicle Sealing Mechanism' with publication number TR 2014 02142, the invention relates to a sealing mechanism, comprising an elastic rubber profile bracket designed on the face of the car door and a counter-profile bracket designed on the opposite side of the car door with a profile bracket having a protruding and an input mouth for the protruding of the other profile bracket.

DE 10 2007 041537 A1 shows a female clip for automotive industry according to the preamble of claim 1.

Analyzing the patent applications in question, no external clip construction was found to provide easy and full assembly of the weatherstrips. As a result, due to the above-mentioned drawbacks and the inadequacy of the existing solutions, an improvement in the technical field has been required.

### The Purpose of Invention

The present invention relates to a female clip for the assembly of weatherstrips, which meets the requirements mentioned above, eliminates all disadvantages and brings some additional advantages.

The primary purpose of the invention is to provide a female clip for the automotive industry to provide the full assembly of weatherstrips used on many visible and invisible surfaces of the vehicle, such as doors, windows, hood and trunk.

The purpose of the invention is to provide a female clip in accordance with the pin system used in the vehicles for ensuring complete fixing of the weatherstrips.

The purpose of the invention is to ensure that weatherstrips are fully fixed to the vehicle and thus provide water, air, sound and dust proofing at the desired quality in the vehicles.

The purpose of the invention is to provide ease of assembly and increase the quality of assembly; through the its structure which enables mounting on a connector located within the weatherstrip and then passing to a pin fixed on the vehicle body.

The purpose of the invention is to offer a female clip that does not create deformation, such as scratches or tears, on the weatherstrip, by mounting on a connector preinjected in a rubber-based injection compound of the weatherstrip.

In order to realize all the advantages mentioned above, the invention is a female clip according to claim 1.

In a preferred embodiment of the invention, said outer prongs are formed on the lower edges those are between the said apertures.

In a preferred embodiment of the invention, said connector is a bracket made of plastic or steel.

In a preferred embodiment of the invention, said pin is a T-stud having cylindrical structure and vertically spot welded on the vehicle body.

In a preferred embodiment of the invention, said inner prongs comprises top surfaces having inclined structure in such a way that they can provide spring back during the passing of the pin.

In a preferred embodiment of the invention, said inner prongs comprises bottom surfaces having horizontal and flat structure in such a way that pin-head of the pin can be locked.

In a preferred embodiment of the invention, said inner prongs comprises rear surfaces having vertical and flat structure to provide strength.

In a preferred embodiment of the invention, said outer prongs comprises top surfaces having horizontal and flat structure in such a way that they can pass and interlock to the bottom surface of the connector.

In a preferred embodiment of the invention, said outer prongs comprises bottom surfaces having inclined structure in such a way that enabling the body passing to the connector.

In a preferred embodiment of the invention, said weatherstrip is rubber based, wherein said rubber is consist of ethylene propylene diene monomer rubber (EPDM) or thermoplastic vulcanizate (TPV) rubber.

In a preferred embodiment of the invention, said weatherstrip is a glass run channel, dust, body, hood, door or trunk strip used in vehicles.

In a preferred embodiment of the invention, the female clip is made of thermoplastic material, wherein said thermoplastic material is polyamide based.

The structural and characteristic features of the invention and all advantages thereof will be understood more clearly by means of the following figures and detailed description which are given by referring to these figures, and therefore the evaluation should be made by taking these figures and detailed explanation into consideration.

### Brief Description of the Figures

- Figure-1a: is the perspective view of the female clip structure.
- Figure-1b: is the top view of the female clip structure.
- Figure-2a: is the A-A cross-section view of the female clip structure.
- Figure-2b: is the B-B cross-section view of the female clip structure.
- Figure-3a: is a schematic view of the female clip mounted on a weatherstrip.
- Figure-3b: is a schematic view of the pin spot welded on a vehicle body.
- Figure-3c: is a schematic view of the weatherstrip mounted on the vehicle by the female clip.

### Reference Numbers

10 Injection compound
20 Connector
   21 Top surface
   22 Bottom surface
30 Female Clip
   31 Body
   32 Lower edge
   33 Upper edge
   34 Aperture
   35 Protrusion
   36 Outer Prong
      361 Top surface
      362 Bottom surface
   37 Gap
   38 Inner prong
      381 Top surface
      382 Bottom surface
      383 Rear surface
40 Vehicle body
50 Pin
   51 Pin head
   52 Pin body

### Detailed Description of the Invention

In this detailed description, the invention and the preferred embodiments of the invention are explained only for a better understanding of the subject-matter without creating any limiting effect.

The invention is based on the principle of ensuring that weatherstrips, used to prevent the entry of water, air, sound and dust in vehicles in the automotive sector, are fully fixed to the vehicle.

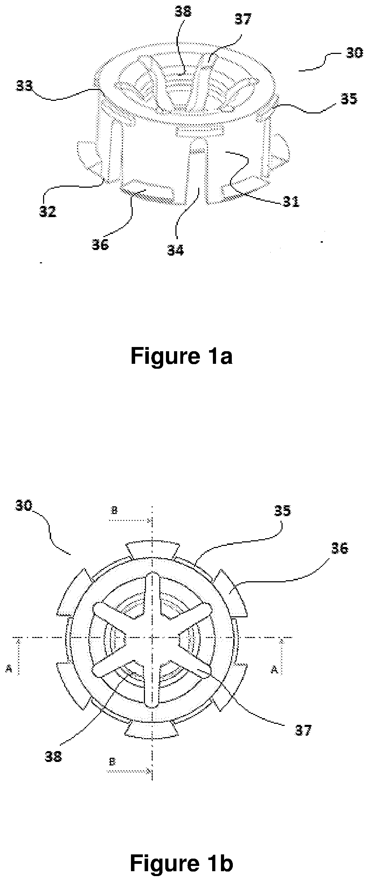

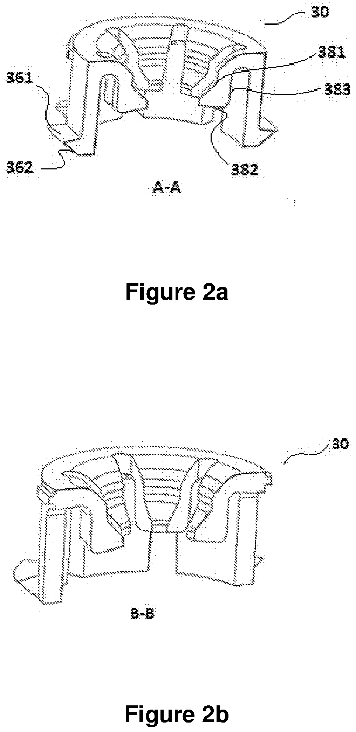

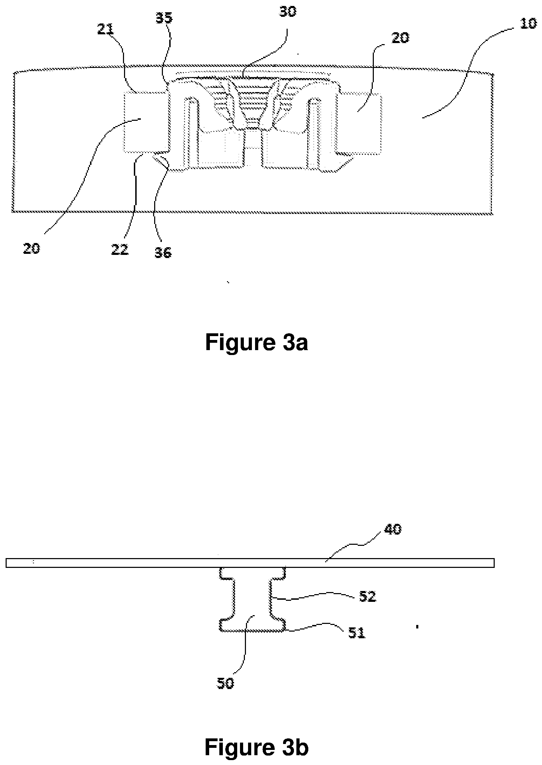

Today in vehicles, pins (50) (stud, tucker) spot welded to the vehicle body (40) are used for reference purposes (Figure 3b). The male clip-female part concept used in the assembly of weatherstrips is adapted to the pin (50) system used in vehicles via designing of female clip-male part concept which has opposite form.

The invention is a female clip (30) to assemble weatherstrips used in the automotive industry to the vehicles; by mounting on a connector (20) located within the weatherstrip and then passing to a pin (50) fixed on the vehicle body (40).

Said connector (20) is preferably a bracket made of plastic or steel, injected into the injection compound (10) contained in the weatherstrip (Figure 3a). Said pin (50) is preferably a T-stud in a cylindrical structure, wider on the pin-head (51) than the pin-body (52), which is spot welded vertically on the vehicle body (40) (Figure 3b).

Figure-1a and 1b, are the perspective and top views of the female clip (30), Figure-2a and 2b are the A-A and B-B cross-sectional views. The female clip (30) is structured on a body (31) that has a cylindrical frame. To ensure that the body (31) is stretched and propagated while the female clip (30) is passed by the connector (20) and mounted, there are apertures (34) that are formed at equal intervals around the lateral. Said apertures (34) are preferably formed in a concave structure extending from the lower edge (32) to the upper edge (33) of the body (31). In a preferred embodiment of the invention, preferably 6 apertures (34) are formed around the body (31) with equal spacing between them. In alternate embodiments, said aperture (34) can include different sizes and shapes, and can be formed in different locations or in different numbers.

Between the end of the said apertures (34) and the upper edge (33), there are protrusions (35) formed on the outer surface of the body (31) extending out of the body (31). These protrusions (35), during the assembly of the female clip (30) to the connector (20) within the injection compound (10), provide an extension to the top surface (21) of the connector (20), thus enable stopping of the female clip (30) moving forward within the connector (20). At the same time, said protrusions (35) also serve to prevent the female clip (30) from being mounted reverse into the connector (20) during assembly. In a preferred embodiment of the invention, preferably 6 protrusions (35) are formed in the shape of a quadrangular prism extending on horizontal axis, extending out of the body (31). In alternate embodiments, said protrusions (35) can include different sizes and shapes, and can be formed in different locations or in different numbers.

On the outer surface of the said body (31), there are the outer prongs (36) built on the lower edges (32) between the apertures (34) mentioned. The outer prongs (36) spring back when the female clip (30) is mounted on the connector (20) in the injection compound (10) and lock into the previous position when they pass through the bottom surface (22) of the connector (20). In this way, the female clip (30) is mounted on the connector (20) by means of the outer prongs (36). The top surfaces (361) of the said outer prongs (36) are horizontal and flat in such a way that they can be locked by passing to the bottom surface (22) of the said connector (20). The bottom surfaces (362) of the said outer prongs (36) are inclined in such a way that body (31) of the female clip (30) can be locked to the connector (20). In a preferred embodiment of the invention, preferably 6 outer prongs (36) were formed in the shape of a triangular prism extending on horizontal axis. In alternate embodiments, said outer prongs (36) can include different sizes and shapes, and can be formed in different locations or in different numbers.

In the internal volume of the body (31) of a female clip (30), there are inner prongs (38) which are formed with equal gaps (37) between them. Said inner prongs (38) extend downwardly from the upper edge (33) of said body (31) towards the center of the body (31). The said inner prongs (38) are spring back while the pin - head (51) is passing in the process of mounting of the female clip (30) to the pin (50) fixed on vehicle body (40), and when the pin-body (52), which is narrower than the pin-head (51), is reached, the inner prongs (38) come to the previous position and lock the pin-head (51). In this way, the female clip (30) is mounted to the pin (50) by means of the inner prongs (38). The top surfaces (381) of the said inner prongs (38) are inclined in such a way that they can provide spring back during the passing of the pin (50). The bottom surfaces (382) are horizontal and flat in such a way that the pin-head (51) of the pin (50) can be locked. The rear surfaces (383) of the said inner prongs (38) are vertical and flat to provide strength. There are voids between the rear surfaces (383) and the wall of the body (31) to enable the said inner prongs (38) spring back. In a preferred embodiment of the invention, preferably 6 inner prongs (38), with 6 equal gaps (37) formed between them, are formed. In alternate embodiments, said inner prongs (38) can include different sizes and shapes, and can be formed in different locations or in different numbers.

The female clip (30) can be produced from thermoplastic materials by plastic injection. In a preferred embodiment of the invention, the female clip (30) is manufactured from polyamide-based thermoplastic material in one piece by plastic injection method. In alternate embodiments, the female clip (30) can be produced from different raw materials using different production methods.

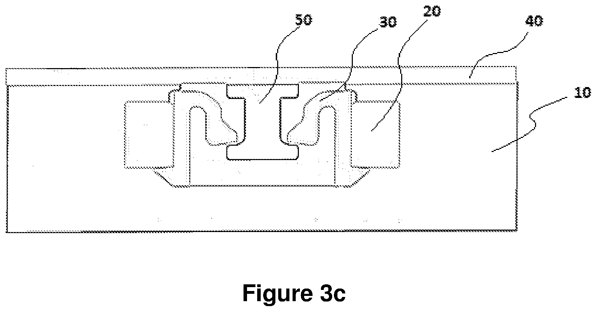

In the assembly of the weatherstrip to the vehicle, the first step is to mount the female clip (30) to the connector (20) which is preinjected into EPDM or TPV rubber-based injection compound (10) (Figure 3a). In the second step of the assembly, the female clip (30) which is mounted on the weatherstrip, is passed to the pin (50) which is spot welded on the vehicle body (40), to complete the mounting (Figure 3c).

Due to the detachable (dismantled) external structure of the female clip (30) to the weatherstrip, the female clip (30) can be easily replaced with a new one, in case of a possible deformation such as fracture of the female clip (30) during or after the assembly process. Thus, there is no need to change the weatherstrip and the continuity of the assembly is provided.

The female clip (30), can be applied to all weatherstrips used on many visible and invisible surfaces of the vehicle, such as doors, windows, hood and trunk. A preferred embodiment of the female clip (30) of invention is designed to be used in the assembly of a glass run channel, dust, body, hood, door or trunk strip used in vehicles. Alternate embodiments of the invention can be used for assembly of many parts, that are visible like floor coverings or invisible, to the vehicle.

## Claims

1. A female clip (30) to assemble weatherstrips, used in the automotive industry, to the vehicles by mounting on a connector (20) located within the weatherstrip and then passing to a pin (50) fixed on the vehicle body (40); the female clip (30) comprising
• a body having a cylindrical frame (31),
• outer prongs (36) formed on the lower edge (32) at the outer surface of said body (31) in order to assemble the body (31) with said connector (20), and pass to the bottom surface (22) of the connector (20) thus provide interlocking between connector (20) and the body (31) and prevent the body (31) from displacing,
• apertures (34) extending from the lower edge (32) of the body (31) to the upper edge (33) of the body, enabling the body (31) to stretch and spring for the passing of the mentioned outer prongs (36) to the bottom surface (22) of the connector (20),
• inner prongs (38) formed in the inner volume of the body (31) where the pin (50) is inserted, and those extend down from the upper edge (33) of the body (31) to the center of the body (31), and spring back from the center of the body (31) towards the body (31) wall when in contact with the pin-head (51) of said pin (50) and then come to the previous position after the pin-head (51) is passed into the body (31), thus locking to the pin (50), and **characterised in that** it further comprises:
• protrusions (35) formed on the outer surface of said body (31) between the end of said apertures (34) and the upper edge (33), which prevent reverse insertion during mounting into the weatherstrip, and serve as a stopper by providing extensions towards the upper surface (21) of the connector (20).

2. A female clip (30) according to Claim 1, wherein said outer prongs (36) are formed on the lower edges (32) those are between the said apertures (34).

3. A female clip (30) according to Claim 1, wherein said inner prongs (38) comprises top surfaces (381) having inclined structure in such a way that they can provide spring back during the passing of the pin (50).

4. A female clip (30) according to Claim 1, wherein said inner prongs (38) comprises bottom surfaces (382) having horizontal and flat structure in such a way that pin-head (51) of the pin (50) can be locked.

5. A female clip (30) according to Claim1, wherein said inner prongs (38) comprises rear surfaces (383) having vertical and flat structure to provide strength.

6. A female clip (30) according to Claim 1, wherein said outer prongs (36) comprises top surfaces (361) having horizontal and flat structure in such a way that they can pass and interlock to the bottom surface (22) of the connector (20).

7. A female clip (30) according to Claim 1, wherein said outer prongs (36) comprises bottom surfaces (362) having inclined structure in such a way that enabling the body (31) passing to the connector (20).

8. A female clip (30) according to Claim 1, wherein said weatherstrip is rubber based.

9. A female clip (30) according to Claim 8, wherein said rubber is consist of ethylene propylene diene monomer rubber or thermoplastic vulcanizate rubber.

10. A female clip (30) according to Claim 1, wherein said weatherstrip is a glass run channel, dust, body, hood, door or trunk strip used in vehicles.

11. A female clip (30) according to Claim 1, **characterized in that** it is made of thermoplastic material.

12. A female clip structure (30) according to Claim 11, wherein said thermoplastic material is polyamide based.

## Patentansprüche

1. Weiblicher Clip (30) zum Montieren von Dichtungen, die in der Automobilindustrie verwendet werden, an den Fahrzeugen durch Anbringen an einem Verbinder (20), der sich innerhalb der Dichtung befindet, und dann Führen zu einem Stift (50), der an der Fahrzeugkarosserie (40) befestigt ist, wobei der weibliche Clip (30) Folgendes umfasst:
• einen Körper, der einen zylindrischen Rahmen (31) aufweist,
• äußere Zinken (36), die an der Unterkante (32) an der Außenfläche des Körpers (31) gebildet sind, um den Körper (31) an dem Verbinder (20) zu montieren, und zu der Bodenfläche (22) des Verbinders (20) geführt werden, wodurch Verriegelung zwischen Verbinder (20) und dem Körper (31) bereitgestellt und verhindert wird, dass sich der Körper (31) verschiebt,
• Öffnungen (34), die sich von der Unterkante (32) des Körpers (31) zu der Oberkante (33) des Körpers erstrecken und dem Körper (31) ermöglichen, sich zu dehnen und zu federn, um die genannten äußeren Zinken (36) zu der Bodenfläche (22) des Verbinders (20) zu führen,
• innere Zinken (38), die in dem Innenvolumen des Körpers (31) gebildet sind, wo der Stift (50) eingesetzt ist, und die sich von der Oberkante (33) des Körpers (31) nach unten zu der Mitte des Körpers (31) erstrecken und von der Mitte des Körpers (31) zu der Wand des Körpers (31) zurückfedern, wenn sie in Kontakt mit dem Stiftkopf (51) des Stifts (50) sind, und dann in die vorherige Position kommen, nachdem der Stiftkopf (51) in den Körper (31) geführt ist, wodurch er mit dem Stift (50) verriegelt wird,
und **dadurch gekennzeichnet, dass** er ferner Folgendes umfasst:
• Vorsprünge (35), die an der Außenfläche des Körpers (31) zwischen dem Ende der Öffnungen (34) und der Oberkante (33) gebildet sind, die umgekehrtes Einsetzen während des Anbringens in der Dichtung verhindern und als Stopper dienen, indem Verlängerungen in Richtung der Oberfläche (21) des Verbinders (20) bereitgestellt werden.

2. Weiblicher Clip (30) nach Anspruch 1, wobei die äußeren Zinken (36) an den Unterkanten (32) gebildet sind, die zwischen den Öffnungen (34) sind.

3. Weiblicher Clip (30) nach Anspruch 1, wobei die inneren Zinken (38) obere Flächen (381) umfasst, die geneigte Struktur aufweisen, sodass sie während des Führens des Stifts (50) Rückfederung bereitstellen können.

4. Weiblicher Clip (30) nach Anspruch 1, wobei die inneren Zinken (38) Bodenflächen (382) umfasst, die horizontale und flache Struktur aufweisen, sodass der Stiftkopf (51) des Stifts (50) verriegelt werden kann.

5. Weiblicher Clip (30) nach Anspruch 1, wobei die inneren Zinken (38) Rückflächen (383) umfasst, die vertikale und flache Struktur aufweisen, um Festigkeit bereitzustellen.

6. Weiblicher Clip (30) nach Anspruch 1, wobei die äußeren Zinken (36) obere Flächen (361) umfasst, die horizontale und flache Struktur aufweisen, sodass sie zu der Bodenfläche (22) des Verbinders (20) geführt und mit dieser verriegelt werden können.

7. Weiblicher Clip (30) nach Anspruch 1, wobei die äußeren Zinken (36) Bodenflächen (362) umfasst, die geneigte Struktur aufweisen, sodass sie ermöglichen, dass der Körper (31) zu dem Verbinder (20) geführt wird.

8. Weiblicher Clip (30) nach Anspruch 1, wobei die Dichtung auf Gummi basiert.

9. Weiblicher Clip (30) nach Anspruch 8, wobei der Gummi ist aus Ethylen-Propylen-Dien-Monomer-Gummi oder thermoplastischem Vulkanisatgummi besteht.

10. Weiblicher Clip (30) nach Anspruch 1, wobei die Dichtung ein Glasführungskanal, Staub-, Karosserie-, Motorhauben-, Tür- oder Kofferraumstreifen ist, der in Fahrzeugen verwendet wird.

11. Weiblicher Clip (30) nach Anspruch 1, **dadurch gekennzeichnet, dass** er aus thermoplastischem Material hergestellt ist.

12. Weibliche Clipstruktur (30) nach Anspruch 11, wobei das thermoplastische Material auf Polyamid basiert.

## Revendications

1. Clip femelle (30) pour assembler des joints d'étanchéité, utilisés dans l'industrie automobile, sur des véhicules par le montage sur un connecteur (20) situé à l'intérieur du joint d'étanchéité puis la conduite à une goupille (50) fixée sur la carrosserie du véhicule (40) ;
le clip femelle (30) comprenant
• un corps comportant un cadre cylindrique (31),
• des griffes extérieures (36) formées sur le bord inférieur (32) au niveau de la surface extérieure dudit corps (31) afin d'assembler le corps (31) avec ledit connecteur (20), et de conduire à la surface inférieure (22) du connecteur (20), pour permettre ainsi un emboîtement entre le connecteur (20) et le corps (31) et empêcher le corps (31) de se déplacer,
• des ouvertures (34) s'étendant depuis le bord inférieur (32) du corps (31) jusqu'au bord supérieur (33) du corps, permettant au corps (31) de s'étirer et d'avoir un effet ressort pour la conduite desdites griffes extérieures (36) à la surface inférieure (22) du connecteur (20),
• des griffes intérieures (38) formées dans le volume intérieur du corps (31) où la goupille (50) est insérée, et celles-ci s'étendent vers le bas depuis le bord supérieur (33) du corps (31) jusqu'au centre du corps (31), et sont rappelées par effet ressort depuis le centre du corps (31) vers la paroi du corps (31) lorsqu'elles sont en contact avec la tête de goupille (51) de ladite goupille (50) puis reviennent à la position précédente une fois que la tête de goupille (51) est conduite dans le corps (31), se verrouillant ainsi sur la goupille (50),
et **caractérisé en ce qu'**il comprend en outre :
• des protubérances (35) formées sur la surface extérieure dudit corps (31) entre l'extrémité desdites ouvertures (34) et le bord supérieur (33), ce qui empêche l'insertion inverse lors du montage dans le joint d'étanchéité, et servent de butée en fournissant des prolongements vers la surface supérieure (21) du connecteur (20).

2. Clip femelle (30) selon la revendication 1, dans lequel lesdites griffes extérieures (36) sont formées sur les bords inférieurs (32) qui se trouvent entre lesdites ouvertures (34).

3. Clip femelle (30) selon la revendication 1, dans lequel lesdites griffes intérieures (38) comprennent des surfaces supérieures (381) comportant une structure inclinée de telle manière à ce qu'elles puissent procurer un rappel par ressort pendant la conduite de la goupille (50).

4. Clip femelle (30) selon la revendication 1, dans lequel lesdites griffes intérieures (38) comprennent des surfaces inférieures (382) comportant une structure horizontale et plate de telle manière à ce que la tête de goupille (51) de la goupille (50) puisse être verrouillée.

5. Clip femelle (30) selon la revendication 1, dans lequel lesdites griffes intérieures (38) comprennent des surfaces arrière (383) comportant une structure verticale et plate pour assurer la résistance.

6. Clip femelle (30) selon la revendication 1, dans lequel lesdites griffes extérieures (36) comprennent des surfaces supérieures (361) comportant une structure horizontale et plate de telle manière à ce qu'elles puissent conduire à et s'emboîter sur la surface inférieure (22) du connecteur (20).

7. Clip femelle (30) selon la revendication 1, dans lequel lesdites griffes extérieures (36) comprennent des surfaces inférieures (362) comportant une structure inclinée de telle manière à permettre au corps (31) de conduire au connecteur (20).

8. Clip femelle (30) selon la revendication 1, dans lequel ledit joint d'étanchéité est à base de caoutchouc.

9. Clip femelle (30) selon la revendication 8, dans lequel ledit caoutchouc est constitué de caoutchouc monomère d'éthylène propylène diène ou de caoutchouc vulcanisé thermoplastique.

10. Clip femelle (30) selon la revendication 1, dans lequel ledit joint d'étanchéité est une bande de canal de vitre, anti-poussière, de carrosserie, de capot, de portière ou de coffre utilisée dans des véhicules.

11. Clip femelle (30) selon la revendication 1, **caractérisé en ce qu'**il est constitué de matière thermoplastique.

12. Structure de clip femelle (30) selon la revendication 11, dans laquelle ledit matériau thermoplastique est à base de polyamide.
